# EUROPÄISCHE PATENTSCHRIFT

(11) **EP 1 365 942 B1**
(45) Veröffentlichungstag und Bekanntmachung des Hinweises auf die Patenterteilung: **25.05.2005**
(21) Anmeldenummer: 02703385.1
(22) Anmeldetag: 07.03.2002
(51) Int. Cl.: B60R 13/02

(54) **BEFESTIGUNGSELEMENT FÜR EIN VERKLEIDUNGSTEIL IM INNEREN EINES KRAFTFAHRZEUGES**
FASTENING ELEMENT FOR PART OF A TRIM INSIDE A MOTOR VEHICLE
ELEMENT DE FIXATION POUR UN ELEMENT D'HABILLAGE INSTALLE DANS L'HABITACLE D'UN VEHICULE AUTOMOBILE

(30) Priorität: 07.03.2001 AT 1682001
(43) Veröffentlichungstag der Anmeldung: 03.12.2003
(73) Patentinhaber: MAGNA STEYR Fahrzeugtechnik AG & Co KG, 8041 Graz (AT)
(72) Erfinder: GÖTZINGER, Bruno, A-8045 Weinitzen (AT); HAUSBERGER, Klaus, A-8042 Graz (AT); SCHAFFER, Jürgen, A-8112 Gratwein (AT)
(74) Vertreter: Kovac, Werner
(86) Internationale Anmeldenummer: PCT/AT2002/000072
(87) Internationale Veröffentlichungsnummer: WO 2002/070304

(56) Entgegenhaltungen:
- EP-A- 0 520 167
- GB-A- 2 304 648
- GB-A- 2 308 340
- US-A- 5 833 303
- PATENT ABSTRACTS OF JAPAN vol. 1999, no. 12, 29. Oktober 1999 (1999-10-29) & JP 11 198748 A (KASAI KOGYO CO LTD), 27. Juli 1999 (1999-07-27)
- PATENT ABSTRACTS OF JAPAN vol. 1998, no. 10, 31. August 1998 (1998-08-31) & JP 10 129376 A (NIPPON PLAST CO LTD;NISSAN MOTOR CO LTD), 19. Mai 1998 (1998-05-19)
- PATENT ABSTRACTS OF JAPAN vol. 018, no. 576 (M-1697), 4. November 1994 (1994-11-04) & JP 06 211088 A (MAZDA MOTOR CORP), 2. August 1994 (1994-08-02)

## Beschreibung

Die Erfindung betrifft ein Befestigungselement für einen Verkleidungsteil im Inneren eines Kraftfahrzeuges, das zwischen einem Strukturteil des Kraftfahrzeuges und dem Verkleidungsteil so befestigt ist, dass der Verkleidungsteil abnehmbar ist und wobei zwischen Verkleidungsteil und Strukturteil ein Schaum vorgesehen ist. Insbesondere ist dabei an die Befestigung von Verkleidungsteilen einer der seitlichen Säulen (z.B. der A-Säule) oder eines Dachholmes gedacht.

Die Befestigung eines solchen Verkleidungsteiles hat verschiedenen Anforderungen zu genügen, insbesondere soll der Verkleidungsteil im Kollisionsfall in ausreichendem Maße Verformungsarbeit aufnehmen und auch abnehmbar und austauschbar sein; letzteres erleichtert die Lagerhaltung bei Innenverkleidungen in verschiedenen Materialien und Farben. Bekannte Lösungen erfüllen entweder nicht beide Anforderungen in vollem Umfang, oder sie sind aufwendig und bestehen aus vielen Teilen, was die Kosten für Fertigung und Logistik erhöht.

Aus der EP 849 123 A1 ist ein Innenverkleidungsteil bekannt, der selbst an seiner unsichtbaren Seite einen Schaumkörper und Schwerter besitzt, die durch den Schaumkörper hindurchreichen und im Strukturteil gehalten sind. Der Schaumkörper bildet gemeinsam mit einem dünnwandigen Kunststoffteil den Innenverkleidungsteil. Das bedeutet zunächst, dass für Kunststoffteil den Innenverkleidungsteil. Das bedeutet zunächst, dass für jede Farb- und Materialvariante ein kompletter Innenverkleidungsteil mitsamt seinen Befestigungsmitteln bereitgehalten werden muss. Unter Schaum wird im Allgemeinen, soferne nichts anderes gesagt ist, ein Kunststoffschaum, insbesondere ein Polyurethanschaum verstanden. Die Fähigkeit derartige Schäume zur Aufnahme von Verformungsenergie ist aber, unabhängig von der chemischen Einstellung ihrer Härte und Festigkeit, sehr begrenzt. Offenporige Schäume können ausserdem Feuchtigkeit aufnehmen und speichern, was zu Korrosion der Strukturteile führen kann.

Aus der EP 736 421 A1 ist ein ähnlicher Innenverkleidungsteil mit denselben Nachteilen bekannt, der zusätzlich noch eine flaches Plättchen enthält, das im Kollisionsfall Verletzungen der Insassen durch eine darunter verborgene Punktschweisskante verhindern soll. Im Normalbetrieb hat es keine Aufgabe zu erfüllen.

Es ist somit Aufgabe der Erfindung, eine Befestigung für einen Innenverkleidungsteil vorzuschlagen, die die oben genannten Anforderungen erfüllt. Sie soll Verformungsarbeit aufnehmen und austauschbar sein; bei gesenkten Kosten für Fertigung und Logistik.

Erfindungsgemäß wird das dadurch erreicht, dass das Befestigungselement selbst ein Körper ist, der aus Leichtmetallschaum besteht, in den zumindest eine metallische Einlage integriert ist, welche an der dem Verkleidungsteil zugewandten Seite bloßliegt und dass an der so gebildeten Blöße der Verkleidungsteil lösbar befestigt ist. So ist der Verkleidungsteil einfach und billig, er kann in verschiedenen Materialien und Farben bereitgehalten werden, das Befestigungselement ist immer dasselbe.

Der Leichtmetallschaum hat zunächst ein wesentlich höheres Energieaufnahmevermögen bei gleichem Verformungsweg. Dadurch, dass er ein eigener Körper ist, werden Schwierigkeiten vermieden, die bei dessen Verbindung mit dem Verkleidungsteil auftreten könnten. Die Einlage gestattet es, die Energieaufnahme zu modulieren, zum Beispiel progressiv auszulegen, weiters erlaubt sie eine maßgenaue Montage des Innenverkleidungsteiles und gibt dabei große Gestaltungsfreiheit.

Vorzugsweise ist das Befestigungselement auf pulvermetallurgischem Wege hergestellt und besitzt eine dessen poröse Struktur umhüllende Haut (Anspruch 2). Diese Herstellungmethode bietet hohe Gestaltungsfreiheit, gestattet das Einschäumen der Einlagen und ist relativ kostengünstig. Ausserdem entsteht dabei eine Oxydhaut, die das Eindringen von Feuchtigkeit unterbindet.

Eine besonders innige Verbindung von metallischer Einlage und dem Schaumkörper wird erreicht, wenn erstere mit ihren an die Blöße anliegenden Teilen in dessen Tiefe reicht (Anspruch 3).

In einer bevorzugten Ausführungsform hat die metallische Einlage an ihrer Blöße ein Loch, in das ein Teil des Verldeidungsteiles eingreift, wobei ein Schnappelement den Verkleidungsteil festhält, und weist der Schaumkörper unter dem Loch eine Vertiefung auf. (Anspruch 4). Der Verkleidungsteil kann so einfach ausgewechselt werden Das Schnappelement kann sowohl an dem einen, als auch an dem anderen Teil angebracht sein.

Ist der Verkleidungsteil länglich, so kann auch das Befestigungselement ein länglicher Körper mit mehreren beabstandeten metallischen Einlagen sein (Anspruch 5). Das gestattet die Anpassung an den zu verkleidenden Strukturteil.

Die Verbindung des Befestigungselementes mit dem Strukturteil kann auf verschiedene Weise vorgenommen werden. Es hat sich als besonders vorteilhaft erwiesen, das mittels eines Klebebandes zu besorgen. (Anspruch 6). Es vereinfacht die Montage erheblich und kann kleinere Unebenheiten beider Teile ausgleichen. In besonders hohem Masse kann es das, wenn es aus
Polyurethan besteht und eine Dicke von 0,5 bis 2 Millimeter aufweist (Anspruch 7). Das hat noch den weiteren Vorteil, dass es unter den im Kollisionsfall auftretenden schnell ansteigenden Kräften erhärtet und die Eigenschaften des Leichtinetallschaumes nicht beeinträchtigt.

Im folgenden wird die Erfindung anhand von Abbildungen beschrieben und erläutert. Es stellen dar:
- Fig. 1:: Eine axonometrische Ansicht des erfindungsgemäßen Befestigungselementes, in ein Kraftfahrzeug eingebaut, und
- Fig. 2:: Einen Schnitt nach A-A in Fig. 1, vergrößert.

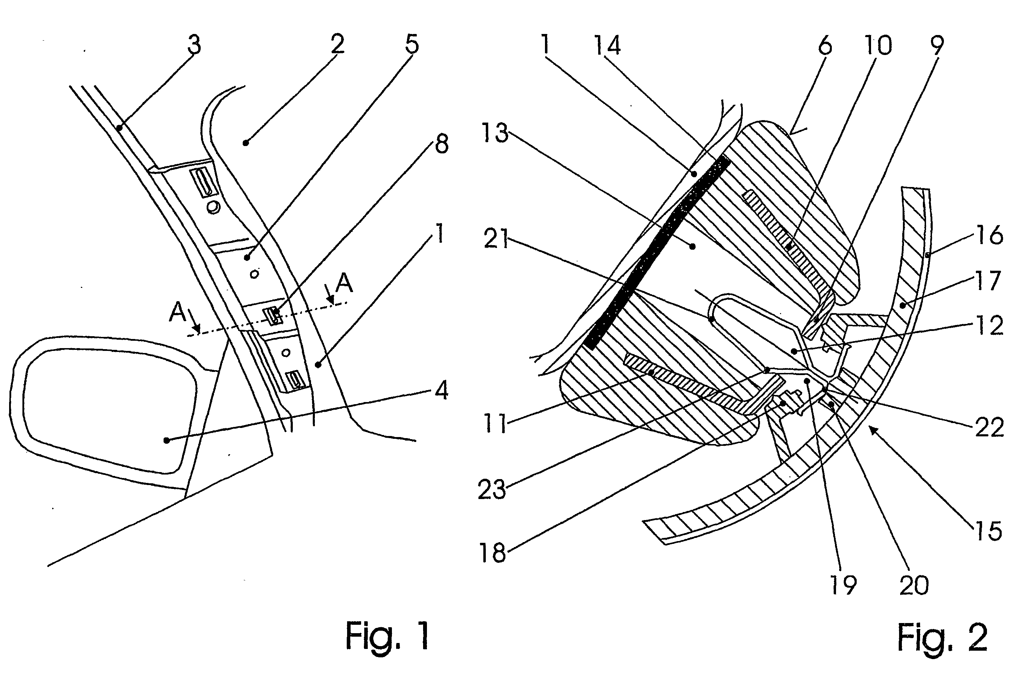

In **Fig. 1** ist das Innere eines Fahrzeuges zu sehen, so wie es sich dem Fahrer darbietet. Eine A-Säule ist mit 1 bezeichnet, auf der einen Seite ist eine Windschutzscheibe 2, auf der anderen eine Tür mit einem Seitenfenster 3. Zur Orientierung ist ein aussenliegender Rückblickspiegel 4 angedeutet. Auf der A-Säule ist ein Befestigungselement 5 zu sehen. Der daran befestigte Verkleidungsteil ist abgenommen.

Das Befestigungselement 5 ist ein länglicher Körper mit einem veränderlichen Querschnitt und einer erheblichen Dicke. Er besteht aus einem Leichtmetallschaum, insbesondere Aluminiumschaum, und ist auf pulvermetallurgischem Weg hergestellt. Die Dichte des Schaumes beträgt 0,4 bis 0,6 Gramm/cm³. Bei der Herstellung auf pulvermetallurgischem Wege bildet sich an der Begrenzungsfläche des Befestigungselementes 5 eine Haut, die das Befestigungselement 5, auch vor dem Eindringen von Feuchtigkeit, schützt.

**Fig. 2** zeigt das Befestigungselement 5 im Schnitt. Die dessen poröse Struktur überdeckende Haut ist angedeutet und mit 6 bezeichnet. Das Befestigungselement 5 enthält hier mehrere Einlagen 8, eine davon ist in Fig. 2 geschnitten, zwei weitere sind in Fig. 1 zu sehen. Diese Einlagen sind von ähnlicher Breite und bei der Herstellung des Schaumkörpers auf pulvermetallurgischem Wege in diesen eingeschäumt. Die Einlage könnte sich aber auch über die gesamte Länge des Befestigungselementes 5 erstrecken.

Die Einlage 8 ist mit ihren seitlichen Teilen 10, 11, die in die Tiefe des Befestigungselementes 5 ragen, umschäumt und tritt dazwischen aus dem Schaumkörper heraus und bildet so eine Blöße 9, die in der Mitte ein Loch 12 oder ein Langloch hat. Darunter hat der Schaumkörper eine Vertiefung 13, die hier eine durchgehende Bohrung ist. Die dem Blech der A-Säule 1 zugewandte Seite des Schaumkörpers ist mit dem Blech mittels eines Klebebandes 14 verbunden. Es ist vorzugsweise ein Polyurethan-Klebeband mit einer Dicke von 0,5 bis 2 Millimeter. Dieser Werkstoff verfestigt sich bei plötzlicher Krafteinwirkung, die erhebliche Dicke des Bandes gleicht kleinere Unebenheiten des Befestigungselementes 5 oder des Bleches der A-Säule 1 aus.

Das Befestigungselement 5 trägt einen Verkleidungsteil 15. Dieser besteht aus einer Sichtschicht 16 aus Kunststoff, Stoff oder Leder und einer beispielsweise hinterspritzten Tragschicht 17 aus Kunststoff. Diese Tragschicht besitzt, jedem Loch 12 einer Einlage 8 zugeordnet, eine Beule 18 mit einem Loch 19 und auf ihrer Innenwand zwei Warzen 20. In diese Beule ist ein Klip 21 aus einem elastischen Werkstoff eingesetzt. Sein Fuß 22 stemmt sich zwischen den Warzen 20 und dem Innenrand des Loches 19 fest, sein Bauch greift durch das Loch 12 der Einlage 8 hindurch und hält den Verkleidungsteil 15 so fest.

Die Verbindung zwischen dem Verkleidungsteil 15 und der Einlage 8 kann auf verschiedene Weise hergestellt werden. So könnten etwa die federelastischen Teile auch an der Einlage 8 vorgesehen, oder überhaupt Schrauben oder andere von der Sichtseite her eingeführte Elemente vorgesehen sein.

## Patentansprüche

1. Befestigungselement für einen Verkleidungsteil im Inneren eines Kraftfahrzeuges, das zwischen einem Strukturteil (1) des Kraftfahrzeuges und dem Verkleidungsteil so befestigt ist, dass der Verkleidungsteil abnehmbar ist und wobei zwischen Verkleidungsteil und Strukturteil ein Schaum vorgesehen ist, **dadurch gekennzeichnet, dass** das Befestigungselement (5) selbst ein Körper ist, der aus Leichtmetallschaum besteht, in den zumindest eine Einlage (8) integriert ist, welche an der dem Verkleidungsteil (15) zugewandten Seite bloßliegt und dass an der so gebildeten Blöße (9) der Verkleidungsteil lösbar befestigt ist.

2. Befestigungselement nach Anspruch 1, **dadurch gekennzeichnet, dass** es auf pulvermetallurgischem Wege hergestellt ist und eine dessen poröse Struktur umhüllende Haut (6) besitzt.

3. Befestigungselement nach Anspruch 1, **dadurch gekennzeichnet, dass** die Einlage (8) mit ihren an die Blöße (9) anliegenden Teilen (10,11) in die Tiefe des das Befestigungselement (5) bildenden Schaumkörpers reicht.

4. Befestigungselement nach Anspruch 1, **dadurch gekennzeichnet, dass** die Einlage (8) an ihrer Blöße ein Loch (12) hat, in das ein Teil (21) des Verkleidungsteiles (15) eingreift, wobei ein Schnappelement (23) den Verkleidungsteil (15) festhält, und dass das Befestigungselement (5) unter dem Loch (12) eine Vertiefung (13) aufweist.

5. Befestigungselement nach Anspruch 1, **dadurch gekennzeichnet, dass** es ein länglicher Körper (5) mit mehreren beabstandeten Einlagen (8) ist.

6. Befestigungselement nach Anspruch 1, **dadurch gekennzeichnet, dass** es mit einem Klebeband (14) am Strukturteil (1) des Kraftfahrzeuges befestigt ist.

7. Befestigungselement nach Anspruch 6, **dadurch gekennzeichnet, dass** das Klebeband (14) aus Polyurethan besteht und eine Dicke von 0,5 bis 2 Millimeter aufweist.

## Claims

1. A fixing element for a trim portion in the interior of a motor vehicle, which is fixed between a structural part (1) of the motor vehicle and the trim portion in such a way that the trim portion is removable and wherein a foam is provided between the trim portion and the structural part, **characterised in that** the fixing element (5) itself is a body comprising light metal foam into which is integrated at least one insert (8) which is exposed at the side towards the trim portion (15) and the trim portion is releasably fixed to the exposed portion (9) formed **in that** way.

2. A fixing element according to claim 1 **characterised in that** it is produced by a powder-metallurgical process and has a skin (6) encasing the porous structure thereof.

3. A fixing element according to claim 1 **characterised in that** the insert (8) extends with its parts (10, 11) bearing against the exposed portion (9) into the depth of the foam body forming the fixing element (5).

4. A fixing element according to claim 1 **characterised in that** at its exposed portion the insert (8) has a hole (12) into which a part (21) of the trim portion (15) engages, a snap element (23) holding the trim portion (15) fast, and the fixing element (5) has a recess (13) under the hole (12).

5. A fixing element according to claim 1 **characterised in that** it is an elongate body (5) having a plurality of spaced inserts (8).

6. A fixing element according to claim 1 **characterised in that** it is fixed with an adhesive band (14) to the structural part (1) of the vehicle.

7. A fixing element according to claim 6 **characterised in that** the adhesive band (14) comprises polyurethane and is of a thickness of from 0.5 to 2 millimetres.

## Revendications

1. Elément de fixation pour un élément d'habillage installé à l'intérieur d'un véhicule automobile, qui est fixé entre une pièce de structure (1) du véhicule automobile et l'élément d'habillage de telle sorte que l'élément d'habillage peut être retiré, de la mousse étant prévue entre l'élément d'habillage et la pièce de structure, **caractérisé en ce que** l'élément de fixation (5) lui-même est un corps qui est constitué d'une mousse métallique légère dans laquelle est intégrée au moins une couche intermédiaire (8) qui est découverte du côté dirigé vers l'élément d'habillage (15), et **en ce que** l'élément d'habillage est fixé de façon amovible sur la partie découverte (9) ainsi formée.

2. Elément de fixation selon la revendication 1, **caractérisé en ce qu'**il est fabriqué par la méthode de Debye-Scherrer et possède une peau (6) enveloppant sa structure poreuse.

3. Elément de fixation selon la revendication 1, **caractérisé en ce que** la couche intermédiaire (8) parvient, avec ses parties (10, 11) portant contre la partie découverte (9), dans la profondeur du corps alvéolaire formant l'élément de fixation (5).

4. Elément de fixation selon la revendication 1, **caractérisé en ce que** la couche intermédiaire (8) comporte, sur sa partie découverte, un trou (12) dans lequel s'accroche une partie (21) de l'élément d'habillage (15), un élément encliquetable (23) retenant l'élément d'habillage (15), et **en ce que** l'élément de fixation (5) comporte sous le trou (12) un évidement (13).

5. Elément de fixation selon la revendication 1, **caractérisé en ce que** l'élément de fixation est un corps allongé (5) comportant plusieurs couches intermédiaires espacées (8).

6. Elément de fixation selon la revendication 1, **caractérisé en ce que** l'élément de fixation est fixé au moyen d'une bande adhésive (14) à la pièce de structure (1) du véhicule automobile.

7. Elément de fixation selon la revendication 6, **caractérisé en ce que** la bande adhésive (14) est en polyuréthane, et a une épaisseur de 0,5 à 2 mm.
